# FASCICULE DE BREVET EUROPEEN

(11) **EP 1 949 386 B1**
(45) Date de publication et mention de la délivrance du brevet: **09.12.2009**
(21) Numéro de dépôt: 06819080.0
(22) Date de dépôt: 16.10.2006
(51) Int. Cl.: G21C 17/06, G21C 21/02

(54) **DISPOSITIF DE FABRICATION DE PASTILLES DE COMBUSTIBLE NUCLEAIRE ET PROCEDE DE FABRICATION METTANT EN OEUVRE UN TEL DISPOSITIF**
EINRICHTUNG ZUM HERSTELLEN VON KERNBRENNSTOFF-PELLETS UND EINE SOLCHE EINRICHTUNG VERWENDENDES HERSTELLUNGSVERFAHREN
DEVICE FOR PRODUCING NUCLEAR FUEL PELLETS AND PRODUCTION METHOD USING ONE SUCH DEVICE

(30) Priorité: 18.10.2005 FR 0553156
(43) Date de publication de la demande: 30.07.2008
(73) Titulaire: Areva NC, 75009 Paris (FR)
(72) Inventeur: LAVOINE, Rémy, F-30580 Lussan (FR); GUELFI, Pierre, F-30133 Les Angles (FR); PANDRAUD, Jean-Luc, F-30330 Cavillargues (FR)
(74) Mandataire: Poulin, Gérard
(86) Numéro de dépôt international: PCT/EP2006/067430
(87) Numéro de publication internationale: WO 2007/045624

(56) Documents cités:
- EP-A- 0 534 065
- FR-A- 1 543 604
- US-A- 4 649 632
- US-A- 4 657 729
- PATENT ABSTRACTS OF JAPAN vol. 017, no. 060 (P-1482), 5 février 1993 (1993-02-05) -& JP 04 269699 A (NUCLEAR FUEL IND LTD), 25 septembre 1992 (1992-09-25)

## Description

### DOMAINE TECHNIQUE ET ART ANTÉRIEUR

La présente invention se rapporte à un dispositif de fabrication de pastilles de combustible nucléaire, notamment de MOX et à un procédé de fabrication mettant en oeuvre un tel dispositif.

Les pastilles de combustible nucléaire, notamment de type MOX (mélange d'oxyde de plutonium et d'oxyde d'uranium) sont utilisées dans la réalisation des assemblages de combustible nucléaire destinés à alimenter des réacteurs nucléaires.

Les caractéristiques des pastilles, telles que leurs dimensions, leur densité et leur composition, doivent être précisément maîtrisées afin d'assurer un fonctionnement sûr et optimum des réacteurs.

Ces pastilles sont obtenues par pressage de poudre dans des matrices et frittage de ces pastilles pressées.

Plusieurs contrôles de ces caractéristiques sont effectués tout au long de la fabrication d'une pastille, par exemple à la sortie de la presse et ensuite après le frittage des pastilles, avant leur mise en place dans une gaine.

Le contrôle en sortie de presse est particulièrement complexe. En effet, la presse comporte plusieurs matrices (ou moules), chacune d'entre elles permettant le pressage d'une pastille. Afin d'effectuer un contrôle efficace, il est nécessaire de vérifier le bon fonctionnement de chaque matrice, en terme notamment de remplissage et de pressage.

Il est connu du document EP 01 534 065, un dispositif de détection de la présence de fêlures dans les pastilles, cette détection étant effectuée directement dans la presse, la presse étant rotative et permettant la réalisation de plusieurs pastilles en même temps. Ce contrôle consiste à mesurer des vibrations et à les comparer à des vibrations représentatives de pastilles défectueuses.

Ce dispositif ne permet pas, par exemple, le contrôle de la densité des pastilles. En outre, il effectue un contrôle systématique sur chaque pastille, ce qui allonge le temps de fabrication des pastilles.

C'est par conséquent un but de la présente invention d'offrir un dispositif de fabrication permettant un contrôle de la densité des pastilles fabriquées.

C'est également un but de la présente invention d'offrir un procédé de fabrication permettant le contrôle des pastilles sans allongement du cycle de fabrication.

### EXPOSÉ DE L'INVENTION

Ce but est atteint par un dispositif de fabrication, permettant de repérer chacune des pastilles en fonction de sa matrice de provenance et d'en prélever au moins une pour l'analyser. Ainsi, il est possible de détecter si une matrice est défectueuse et d'intervenir en conséquence.

En d'autres termes, le dispositif selon la présente invention permet d'identifier chaque pastille, ainsi il est simple de vérifier le bon fonctionnement d'une matrice déterminée en contrôlant une pastille provenant de ladite matrice.

La présente invention a alors principalement pour objet un dispositif de fabrication comportant une presse munie de matrices, un convoyeur destiné à transporter les pastilles de la presse vers une zone de frittage, des moyens de transfert des pastilles de la presse vers le convoyeur, et des moyens de contrôle d'au moins une pastille de combustible nucléaire en sortie d'une presse, **caractérisé en ce que** lesdits moyens de contrôle comportent des moyens pour identifier chaque pastille selon sa matrice d'origine, lesdits moyens d'identification étant formés par une succession de logements portés par la surface du convoyeur, et aptes à recevoir chacun une pastille, chacun des logements étant associé à une matrice déterminée.

En outre, ces logements peuvent être perpendiculaires à une direction de déplacement du convoyeur.

Avantageusement, la distance séparant deux logements adjacents est égale à celle séparant deux matrices, dont les projections respectives sur une droite parallèle à la direction de déplacement du convoyeur sont les plus proches.

Le convoyeur peut également comporter des moyens pour aligner les logements avec les matrices.

Dans un exemple de réalisation, le convoyeur est déplacé par des rouleaux, un tour complet de rouleau correspondant à un déplacement d'un nombre déterminé de logements.

Dans un mode particulier, les logements sont adaptés pour recevoir les pastilles allongées.

Le convoyeur peut, par exemple, être une bande sans fin.

De manière avantageuse, les logements sont délimités par des ailettes sensiblement perpendiculaires à la bande.

Le dispositif selon la présente invention, peut comporter au moins un moyen de prélèvement d'au moins une pastille d'une matrice déterminée vers un dispositif d'analyse.

Ce moyen de prélèvement peut être formé par un piston apte à coulisser parallèlement à l'axe des logements et poussant une pastille déterminée hors de son logement, lorsque le logement repéré est en face du piston.

Les moyens de transfert, quant à eux, comportent, avantageusement, un peigne apte à coulisser sur les matrices perpendiculairement à la direction de déplacement du convoyeur.

Le peigne peut comporter des doigts séparés par des espaces, le nombre d'espaces étant au moins égal au nombre de matrices.

Ces espaces sont, de manière préférée, de forme évasée en direction du convoyeur pour accueillir les pastilles.

De manière avantageuse, les moyens de transfert sont aptes à permettre une rotation autour d'un axe parallèle à la direction de déplacement du convoyeur.

Selon un exemple de réalisation, la presse comporte une extrémité longée par le convoyeur comportant un biseau vers le bas en direction du convoyeur.

Le dispositif selon la présente invention peut comporter également un dispositif d'analyse des pastilles prélevées. Il peut également comporter des moyens pour introduire les pastilles prélevées dans le dispositif de fabrication en aval des moyens de prélèvement, lorsque leurs caractéristiques sont acceptables.

La présente invention a également pour objet un procédé de prélèvement de pastilles après leur pressage pour leur contrôle, comportant les étapes :
- de remplissage des matrices avec de la poudre,
- de pressage de la poudre,
- de transfert des pastilles sur le convoyeur,
- d'actionnement du convoyeur,
- de prélèvement d'une pastille d'une matrice déterminée,
- d'acheminement des pastilles vers une zone de frittage.

De manière avantageuse, lors de l'étape de prélèvement, la pastille prélevée provient d'une matrice différente de celle de la pastille prélevée lors d'une étape de prélèvement précédente.

Dans un exemple de réalisation, lors de l'étape d'actionnement du convoyeur, on peut prévoir que celui-ci déplace un nombre de logements égal au nombre de pastilles chargées plus un.

Dans un autre exemple de réalisation, on peut prévoir, que lors de l'étape de l'actionnement du convoyeur, celui-ci déplace un nombre de logements égal au nombre de pastilles chargées.

Lors de l'étape de transfert, le convoyeur peut, par exemple, s'immobiliser par rapport à la presse, de manière à aligner chaque matrice avec un logement.

De manière avantageuse, lors de l'étape de transfert, les pastilles basculent autour d'un axe parallèle à la direction de déplacement du convoyeur, d'une position debout vers une position couchée.

Il peut également être prévu une étape, dans laquelle si une pastille prélevée est considérée comme acceptable, elle est réintroduite dans la chaîne de fabrication.

Le dispositif selon la présente invention s'intègre parfaitement à la chaîne de fabrication et ne ralentit pas ou peu la cadence de fabrication. De plus, il permet une détection rapide des défauts.

Le dispositif selon la présente invention prévoit avantageusement de réaliser un contrôle par échantillonnage, ce qui permet de ne pas perturber de manière excessive la chaîne de production.

### BRÈVE DESCRIPTION DES DESSINS

La présente invention sera mieux comprise à l'aide de la description qui va suivre et des dessins en annexe, sur lesquels :
- la figure 1 est une représentation schématique d'un dispositif de fabrication selon la présente invention,
- la figure 2 est une vue de coté d'un détail d'un convoyeur selon la présente invention,

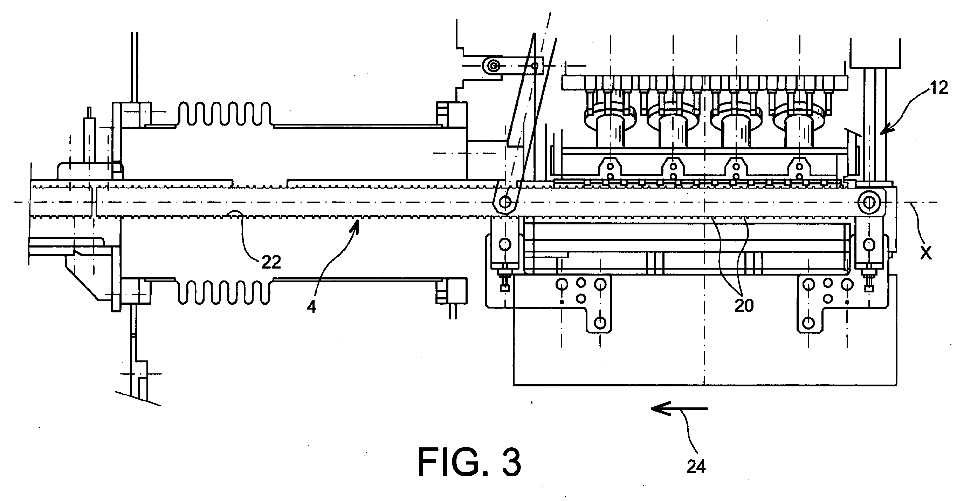

- la figure 3 est une vue de dessus du convoyeur de la figure 2,
- la figure 4 est une représentation schématique d'un détail du dispositif de fabrication selon la présente invention vue de dessus,
- les figures 5a et 5b sont des schémas de deux étapes de transfert de pastilles selon la présente invention,
- la figure 6 est une représentation schématique d'une bande selon un mode préféré de réalisation.

### EXPOSÉ DÉTAILLÉ DE MODES DE RÉALISATION PARTICULIERS

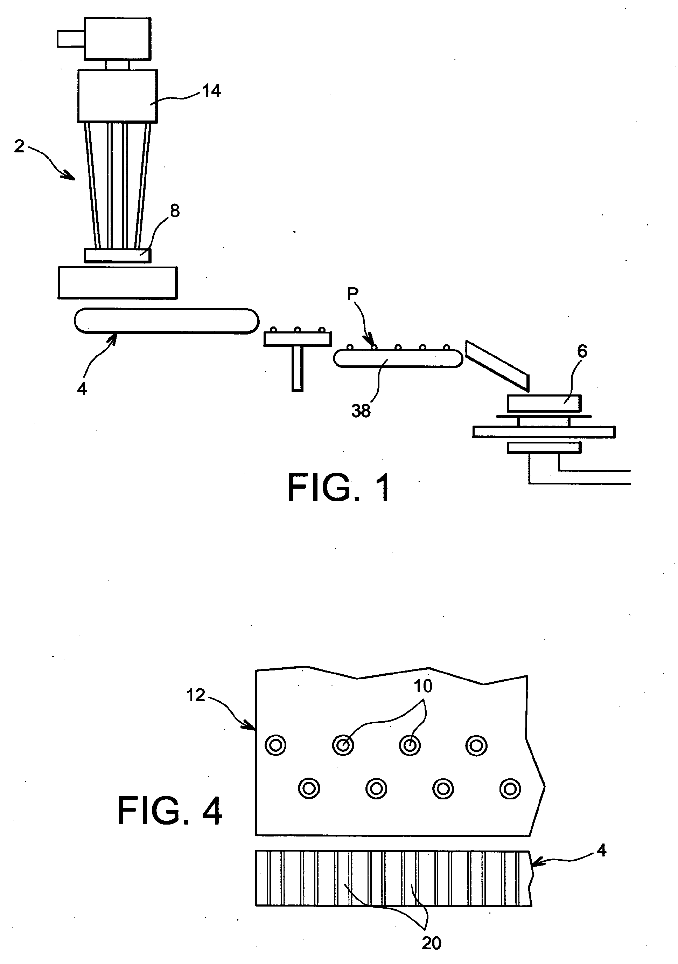

Sur la figure 1, on peut voir un schéma d'un dispositif selon la présente invention comportant une presse 2 de pastilles P, un convoyeur 4 apte à transporter les pastilles P de la presse vers une nacelle 6, la nacelle 6 étant destinée à circuler dans un four (non représenté) pour effectuer le frittage des pastilles qu'elle contient.

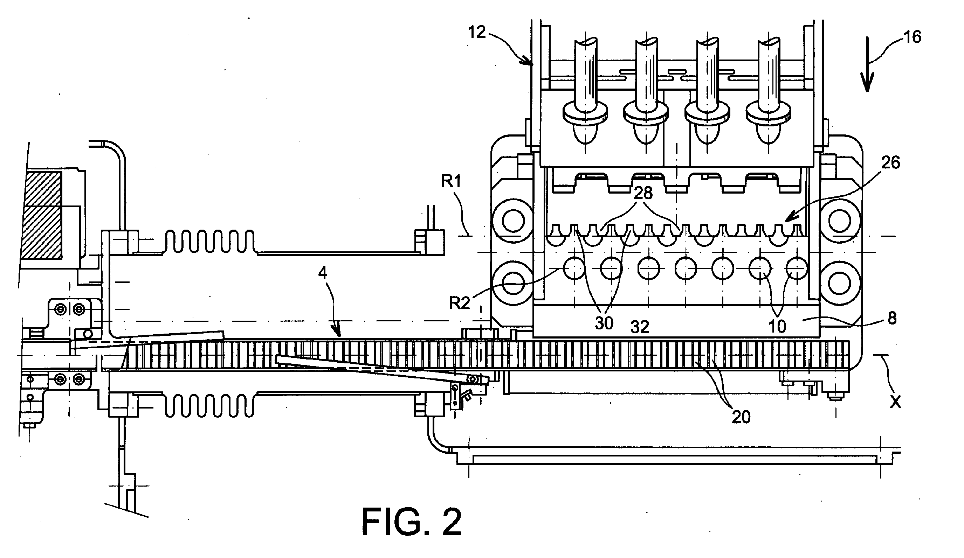

La presse 2 comporte une table 8 munie de matrices 10 (figure 2) formant des moules, dans lesquelles de la poudre est pressée à l'aide de poinçons (non représentés).

Les pastilles produites P ont sensiblement la forme d'un cylindre régulier.

Le remplissage des matrices 10 s'effectue à l'aide d'un sabot 12, alimenté en poudre par une trémie 14. Le sabot 12 est destiné à se déplacer au dessus des matrices pour distribuer, de manière sensiblement uniforme, la poudre dans les matrices 10.

Sur la figure 2, on peut voir la distribution des matrices sous la forme de deux rangées R1, R2, les matrices étant décalées transversalement l'une par rapport à l'autre, de manière à ce qu'en regardant selon la flèche 16, une matrice de la rangée R1 se trouve entre deux matrices de la rangée R2.

Dans l'exemple de réalisation représentée, chaque rangée R1, R2 comporte sept matrices disposées parallèlement à un axe X.

Le dispositif de fabrication selon la présente invention, permet un contrôle de la qualité de fabrication de chaque matrice et en particulier des poinçons, pour cela il comporte des moyens pour vérifier les caractéristiques des pastilles telles que, la densité. La densité est par exemple calculée à partir de la masse de la pastille, qui est obtenue par pesée et du volume de la pastille ; le diamètre de la pastille est défini lors du paramétrage de la presse et la hauteur de la pastille est mesurée en sortie de presse, la pastille peut comporter des chanfreins au niveau de ses extrémités, leurs dimensions sont définies lors du paramétrage.

Selon la présente invention, le convoyeur 4 comporte des logements 20 aptes à recevoir individuellement une pastille d'une matrice 10 déterminée.

Le convoyeur est formé, avantageusement, d'une bande sans fin 22 portant des logements 20. La bande sans fin est enroulée autour d'au moins un rouleau d'entraînement et au moins un rouleau de guidage séparés d'une distance suffisante pour tendre la bande. Chaque rouleau est mobile en rotation autour d'un axe, les axes étant parallèles. La rotation du rouleau d'entraînement provoque le déplacement de la bande, qui est guidée à une deuxième extrémité par le rouleau de guidage.

On pourrait également prévoir deux rouleaux d'entraînement synchronisés.

La distance séparant deux logements 20 adjacents est sensiblement égale à celle séparant deux matrices 10, dont les projections respectives sur une droite parallèle à la direction de déplacement du convoyeur sont les plus proches. (Figure 4)

Les logements sont aptes à recevoir chacun une pastille allongée.

La dimension transversale de la bande est, de manière avantageuse, au moins aussi grande que la dimension longitudinale des pastilles P, pour améliorer leur maintien sur la bande.

Les logements 20 sont, par exemple, rapportés sur la bande 22 ou avantageusement d'un seul tenant, avec la bande, par exemple réalisés par moulage. La bande est par exemple réalisée en élastomère, résistant aux radiations.

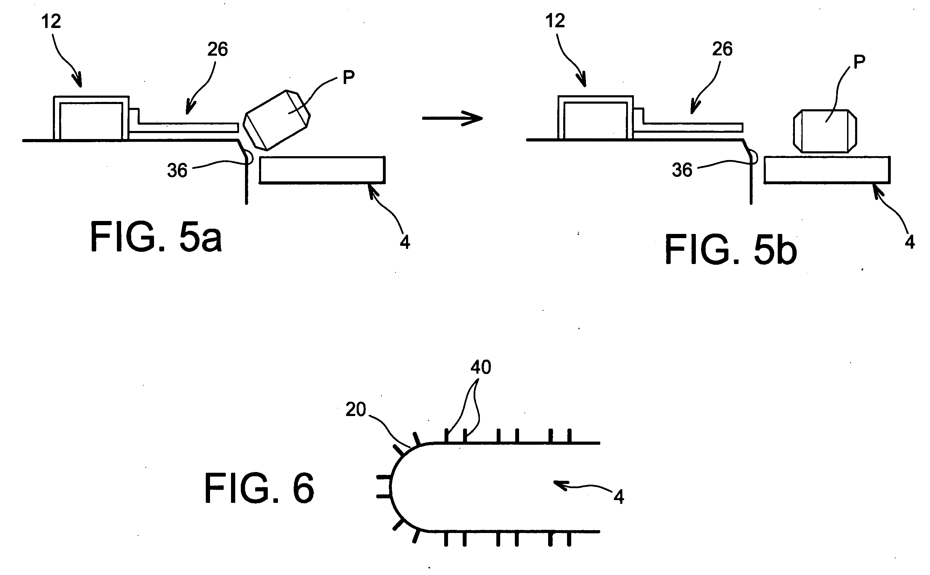

Sur la figure 6, on peut voir un exemple de réalisation des logements 20. La bande comporte des ailettes 40 sensiblement perpendiculaires à la bande et délimitant des compartiments formant logements 20. Ce type de bande permet d'assurer le positionnement de la pastille au droit du dispositif d'éjection.

De manière avantageuse, le dispositif d'éjection est situé sur une partie inclinée de la bande, cette partie inclinée permet à la pastille de rouler et de se positionner contre une ailette du convoyeur. Ainsi la pastille est toujours positionnée de la même façon pour l'éjection vers le dispositif de contrôle dimensionnel.

On peut prévoir également des logements à section transversale en V ou en U.

Le convoyeur 4 se déplace dans le sens indiqué par la flèche 24, pour acheminer les pastilles P vers une zone de chargement en vue d'une opération de frittage.

Dans l'exemple représenté, la bande se déplace de quatorze logements ou de quinze logements, laissant dans ce dernier cas, un logement vacant entre chaque chargement suite à un coup de presse.

Lorsque la bande se déplace de quinze logements, elle laisse libre un logement entre chaque passe de presse, ce qui permet de repérer visuellement la position de la pastille pressée dans le poinçon disposé en premier dans la presse dans le sens de déplacement de la bande de chaque coup de presse. Ceci est particulièrement adapté à la fabrication en continu des pastilles.

Lorsqu'un contrôle dimensionnel est nécessaire, la bande se déplace d'un logement à la fois, avec à chaque fois une évacuation de la pastille vers le dispositif de contrôle dimensionnel. Ceci est répété quatorze fois afin de prélever les quatorze pastilles correspondant aux quatorze poinçons de la presse.

Le dispositif de fabrication comporte également des moyens pour permettre l'alignement des encoches 20 avec les matrices 10.

Selon l'invention, il est avantageusement prévu qu'une révolution d'un rouleau autour de son axe représente un déplacement de quatorze ou quinze logements, selon le mode de chargement prévu. Ainsi avec un simple capteur de rotation, il est possible de contrôler le déplacement de la bande. Il suffit alors de régler l'alignement des encoches et des matrices en début de cycle de fabrication.

On peut également prévoir que le déplacement du nombre nécessaire de logements corresponde, par exemple, à un demi-tour, à un quart ou à plus d'un tour de rouleau.

De manière avantageuse, lors du chargement des pastilles sur le convoyeur, celui-ci est à l'arrêt.

Le dispositif selon la présente invention comporte également des moyens pour transférer les pastilles de la presse sur le convoyeur 4, formés par un peigne 26 apte à se déplacer parallèlement à la surface de la table et comportant des doigts 28 s'étendant perpendiculairement à l'axe X en direction du convoyeur. Le peigne est disposé suffisamment haut pour éviter toute interaction avec le poinçon inférieur et suffisamment bas pour assurer un maintien perpendiculaire des pastilles par rapport au plan de la table lors du déplacement de celles-ci.

Si la presse comporte n matrices, le peigne comporte avantageusement n + 1 doigts délimitant deux par deux un espace 30 aligné avec une matrice 10 selon un axe orthogonal à l'axe X. Par exemple, la presse comporte quatorze matrices et le peigne comporte quinze doigts (figure 2).

Ainsi chaque matrice 10 est associée à un espace 30.

Lors du transfert des pastilles sur le convoyeur, les pastilles sont en saillie de la table au niveau de leur matrice d'origine, leur axe étant orthogonal au plan de la table. Le peigne se déplace en direction du convoyeur 4, chaque pastille est alors reçue dans l'espace 30 associé. Le peigne 26 déplace les pastilles jusqu'à ce qu'elles basculent sur le convoyeur (figure 5a). Chaque pastille P est alors allongée dans un logement 20 (figure 5b).

De manière avantageuse, chaque doigt comporte une extrémité 32 orientée en direction du convoyeur, biseautée de manière à délimiter des espaces 30 évasés, améliorant le maintien des pastilles P lors de leur déplacement sur la table.

De manière avantageuse, le peigne est fixé sur une extrémité du sabot 12 de remplissage.

Comme on peut le voir sur les figures 5a et 5b, le convoyeur longe une extrémité de la table, qui comporte avantageusement un biseau 36 vers le bas en direction du convoyeur, de manière à faciliter le pivotement des pastilles. Cette position couchée des pastilles sur le convoyeur facilite la préhension des pastilles.

Après chaque chargement de la bande, la bande se déplace de manière à présenter à nouveau n logements 20 libres en face des n matrices.

Le dispositif de fabrication selon la présente invention, comporte également des moyens de prélèvement d'au moins une pastille pour permettre son contrôle. De tels moyens de prélèvement peuvent être formés par un piston apte à coulisser selon un axe orthogonal à la direction X et de dimensions inférieures à celles d'un logement 20.

Des moyens de commande permettent de d'actionner le piston lorsqu'un logement déterminé passe devant le piston.

Le piston est actionné, par exemple de manière pneumatique, hydraulique ou électromécanique.

De manière avantageuse, le convoyeur s'immobilise un court instant pour le prélèvement de la pastille.

Chaque logement, lors du chargement, est aligné avec une matrice déterminée, puis les chargements suivants s'effectuent de manière déterminée par un déplacement organisé de la bande. Ainsi, à tout moment, la provenance de chaque pastille est connue.

Ceci permet d'effectuer, d'une part un contrôle non redondant à chaque coup de presse, c'est-à-dire qu'il est possible de prélever une pastille provenant d'une matrice différente de celle de la pastille précédemment contrôlée. Ainsi, il est aisé de faire un contrôle systématique de toutes les matrices de manière cyclique. D'autre part, la connaissance de la matrice d'origine permet d'intervenir de manière ciblée sur la matrice en cause, rendant les réparations plus rapides et plus faciles.

Le contrôle peut s'effectuer, soit :
- par échantillonnage de la pastille issue du poinçon n°1 lors du premier coup de presse, de la pastille issue du poinçon n°2 lors du deuxième coup de presse, etc...
- par échantillonnage de quatorze pastilles issues d'un même coup de presse.

Si, en revanche les contrôles ne détectent aucune divergence intolérable des caractéristiques de la pastille prélevée par rapport à des intervalles déterminés de valeurs, la pastille est réintroduite dans le dispositif de fabrication.

Si les contrôles, par contre, mettent à jour une divergence d'au moins une caractéristique de la pastille, par rapport aux critères fixés, la pastille est mise de côté. Le dispositif de fabrication peut alors être arrêté pour intervenir sur la presse

De manière avantageuse, il est prévu de prélever une seule pastille sur les quatorze produites. De plus à chaque coup de presse, une pastille provenant d'une matrice différente de celle de la pastille précédemment prélevée est contrôlée. Ce contrôle par échantillonnage fournit des informations très pertinentes sur la qualité des pastilles produites.

Le convoyeur 4 transporte, de manière avantageuse, les pastilles jusqu'à un autre dispositif de transport 38, par exemple un convoyeur à bande qui acheminera les pastilles jusqu'à un dispositif de chargement de nacelles.

Les nacelles sont ensuite déplacées à l'aide de sabots à l'intérieur d'un four pour fritter les pastilles.

Le procédé de fabrication selon la présente invention comporte les étapes suivantes :
- remplissage des matrices,
- pressage de la poudre,
- transfert des pastilles sur le convoyeur selon la présente invention,
- prélèvement d'au moins une pastille pour le contrôle de ses caractéristiques et le contrôle de celle-ci,
- acheminement des pastilles vers une zone de frittage.

Nous allons maintenant détailler les étapes du procédé selon la présente invention.

Lors de l'étape de remplissage, le sabot 12 effectue des mouvements d'aller et retour sur les surfaces de la table, permettant une répartition homogène de la poudre dans les matrices.

Lorsque le remplissage est terminé, le sabot est éloigné des matrices pour permettre l'action d'un poinçon inférieur et d'un poinçon supérieur pour presser la poudre dans chaque matrice.

Lorsque le pressage est terminée, la table, de manière avantageuse, s'abaisse, les poinçons inférieurs restés immobiles provoquent l'émergence des pastilles hors des matrices, l'axe des pastilles est alors perpendiculaire au plan de la table.

Le peigne, porté par le sabot, se déplace ensuite en direction du convoyeur 4, poussant les pastilles vers le convoyeur. Lorsque les pastilles arrivent à l'extrémité de la table longée par le convoyeur, celles-ci basculent autour d'un axe parallèle à la direction de déplacement du convoyeur, d'une position debout vers une position couchée.

Lors de cette étape de transfert et avant le basculement des pastilles, le convoyeur s'est avantageusement immobilisé, de manière à ce que les logements 20 soient alignés avec les matrices 10.

Ensuite, le convoyeur peut déplacer un nombre de logements égal au nombre de pastilles à charger ou un nombre de logements égal au nombre de pastilles à charger plus un en fonction des réglages choisis.

Lors de l'étape de prélèvement, on prévoit avantageusement de ne prélever qu'une seule pastille, la pastille prélevée provenant d'une matrice différente de celle de la pastille prélevée lors d'une étape de prélèvement précédente.

Lors de l'étape d'acheminement, le convoyeur transporte les pastilles restantes vers une zone de chargement de nacelles pour le frittage desdites pastilles. On peut également prévoir une réintroduction de la pastille prélevée et contrôlée, lorsqu'il a été constaté qu'elle est acceptable.

## Revendications

1. Dispositif de fabrication de pastilles de combustible nucléaire comportant une presse (2) munie de matrices (10), un convoyeur (4) destiné à transporter des pastilles (P) de la presse (2) vers une zone de frittage, des moyens de transfert (26) des pastilles de la presse (2) vers le convoyeur (4), et des moyens de contrôle d'au moins une pastille de combustible nucléaire en sortie d'une presse (2), lesdits moyens de contrôle comportant des moyens pour identifier chaque pastille selon sa matrice (10) d'origine, lesdits moyens d'identification étant formés par une succession de logements (20) portés par la surface du convoyeur (4), et aptes à recevoir chacun une pastille (P), chacun des logements étant associé à une matrice déterminée.

2. Dispositif selon la revendication précédente, dans lequel les logements (20) sont perpendiculaires à une direction (X) de déplacement du convoyeur.

3. Dispositif selon la revendication 1 ou 2, dans lequel la distance séparant deux logements (20) adjacents est égale à celle séparant deux matrices (10), dont les projections respectives sur une droite parallèle à la direction de déplacement du convoyeur sont les plus proches.

4. Dispositif selon la revendication précédente, dans lequel le convoyeur (4) comporte des moyens pour aligner les logements avec les matrices.

5. Dispositif selon l'une des revendications 1 à 4, dans lequel le convoyeur est déplacé par des rouleaux et dans lequel un tour complet de rouleau correspond à un déplacement d'un nombre déterminé de logements (20).

6. Dispositif selon l'une quelconque des revendications 1 à 5, dans lequel les logements (20) sont adaptés pour recevoir les pastilles (P) allongées.

7. Dispositif selon la revendication 6, dans lequel les logements (20) sont délimités par des ailettes (40) sensiblement perpendiculaires à la bande.

8. Dispositif selon l'une quelconque des revendications précédentes, dans lequel le convoyeur (4) est une bande sans fin (22).

9. Dispositif selon l'une quelconque des revendications précédentes, comportant au moins un moyen de prélèvement d'au moins une pastille (P) d'une matrice (10) déterminée vers un dispositif d'analyse.

10. Dispositif selon la revendication précédente, dans lequel le moyen de prélèvement est un piston apte à coulisser parallèlement à l'axe des logements (20) et poussant une pastille (P) déterminée hors de son logement (20), lorsque le logement (20) repéré est en face du piston.

11. Dispositif selon l'une quelconque des revendications précédentes, dans lequel les moyens de transfert comportent un peigne (26) apte à coulisser sur les matrices (10) perpendiculairement à la direction (X) de déplacement du convoyeur.

12. Dispositif selon la revendication précédente, dans lequel le peigne (26) comporte des doigts (28) séparés par des espaces (30), le nombre d'espaces (30) étant au moins égal au nombre de matrices (10).

13. Dispositif selon la revendication précédente, dans lequel les espaces (30) sont de forme évasée en direction du convoyeur pour accueillir les pastilles (P).

14. Dispositif selon l'une des revendications 1 à 13, en combinaison avec la revendication 2, dans lequel les moyens de transfert sont aptes à permettre une rotation autour d'un axe parallèle à la direction de déplacement du convoyeur (4).

15. Dispositif selon l'une quelconque des revendications précédentes, dans lequel la presse comporte une extrémité longée par le convoyeur, comportant un biseau (36) vers le bas en direction du convoyeur.

16. Dispositif selon l'une quelconque des revendications précédentes, comportant également un dispositif d'analyse des pastilles prélevées.

17. Dispositif selon l'une quelconque des revendications précédentes, comportant des moyens pour introduire les pastilles prélevées dans le dispositif fabrication en aval des moyens de prélèvement, lorsque leurs caractéristiques sont acceptables.

18. Procédé de fabrication de pastilles de combustible nucléaire mettant en oeuvre le dispositif selon l'une quelconque des revendications précédentes, comportant les étapes :
- de remplissage des matrices (10) avec de la poudre,
- de pressage de la poudre,
- de transfert des pastilles (P) sur le convoyeur (4),
- d'actionnement du convoyeur (4),
- de prélèvement d'une pastille (P) d'une matrice (10) déterminée,
- de vérification du bon fonctionnement de ladite matrice prédéterminée en contrôlant ladite pastille provenant de ladite matrice,
- d'acheminement des pastilles (P) vers une zone de frittage.

19. Procédé selon la revendication précédente, dans lequel lors de l'étape de prélèvement, la pastille (P) prélevée provient d'une matrice (10) différente de celle de la pastille prélevée lors d'une étape de prélèvement précédente.

20. Procédé selon la revendication 18 ou 19, dans lequel lors de l'étape d'actionnement du convoyeur (4), celui-ci déplace un nombre de logements (20) égal au nombre de pastilles (P) chargées plus un.

21. Procédé selon l'une des revendications 18 à 20, dans lequel lors de l'étape de l'actionnement du convoyeur (4), celui-ci déplace un nombre de logements (20) égal au nombre de pastilles (P) chargées.

22. Procédé selon l'une quelconque des revendications 18 à 21, dans lequel lors de l'étape de transfert, le convoyeur (4) s'immobilise par rapport aux matrices (10), de manière à aligner chaque matrice (10) avec un logement (20).

23. Procédé selon l'une quelconque des revendications 18 à 22, dans lequel lors de l'étape de transfert, les pastilles (P) basculent autour d'un axe parallèle à la direction de déplacement du convoyeur, d'une position debout vers une position couchée.

24. Procédé selon l'une quelconque des revendications 18 à 23, comportant une étape supplémentaire d'introduction d'une pastille prélevée dans le dispositif de fabrication après les moyens de prélèvement, lorsqu'elle est considérée comme acceptable.

## Claims

1. A device for producing nuclear fuel pellets including a press (2) provided with dies (10), a conveyor (4) intended to transport pellets (P) from the press (2) to a sintering area, means (26) for transferring pellets from the press (2) to the conveyor (4), and means for inspecting at least one nuclear fuel pellet at the exit of a press (2), said inspection means including means for identifying each pellet according to its die (10) of origin, said identification means being formed by a succession of housings (20) borne by the surface of the conveyor (4), and each capable of receiving a pellet (P), each of the housings being associated with a determined die.

2. The device according to the preceding claim, wherein the housings (20) are perpendicular to a displacement direction (X) of the conveyor.

3. The device according to claim 1 or 2, wherein the distance separating two adjacent housings (20) is equal to that separating two dies (10), the respective projections of which on a line parallel to the displacement direction of the conveyor are the closest.

4. The device according to the preceding claim, wherein the conveyor (4) includes means for aligning the housings with the dies.

5. The device according to any of claims 1 to 4, wherein the conveyor is displaced by rollers and wherein a complete roller turn corresponds to a displacement by a determined number of housings (20).

6. The device according to any of claims 1 to 5, wherein the housings (20) are adapted so as to receive the pellets (P) which are lying.

7. The device according to claim 6, wherein the housings (20) are delimited by fins (40) substantially perpendicular to the belt.

8. The device according to any of the preceding claims, wherein the conveyor (4) is an endless belt (22).

9. The device according to any of the preceding claims, including at least one means for picking up at least one pellet (P) on a determined die (10) to bring it to an analysis device.

10. The device according to the preceding claim, wherein the picking-up means is a piston capable of sliding parallel to the axis of the housings (20) and pushing a determined pellet (P) out of its housing (20), when the located housing (20) is facing the piston.

11. The device according to any of the preceding claims, wherein the transfer means include a comb (26) capable of sliding on the dies (10) perpendicularly to the displacement direction (X) of the conveyor.

12. The device according to the preceding claim, wherein the comb (26) includes fingers (28) separated by spaces (30), the number of spaces (30) being at least equal to the number of dies (10).

13. The device according to the preceding claim, wherein the spaces (30) are of a flared shape towards the conveyor in order to receive the pellets (P).

14. The device according to any of claims 1 to 13, in combination with claim 2, wherein the transfer means are capable of allowing rotation around an axis parallel to the displacement direction of the conveyor (4).

15. The device according to any of the preceding claims, wherein the press includes an end bordered by the conveyor, including a downward bevel (36) towards the conveyor.

16. The device according to any of the preceding claims, also including a device for analyzing the picked-up pellets.

17. The device according to any of the preceding claims, including means for introducing the picked-up pellets into the production device downstream from the picking-up means, when their characteristics are acceptable.

18. A method for producing nuclear fuel pellets applying the device according to any of the preceding claims, including the steps of:
- filling the dies (10) with powder,
- pressing the powder,
- transferring the pellets (P) onto the conveyor (4),
- actuating the conveyor (4),
- picking up a pellet (P) from a determined die (10),
- checking proper operation of said predetermined die by inspecting said pellet originating from said die,
- conveying the pellets (P) towards a sintering area.

19. The method according to the preceding claim, wherein during the picking-up step, the picked-up pellet (P) originates from a die (10) different from the one of the picked-up pellet during a preceding pick-up step.

20. The method according to claim 18 or 19, wherein during the step for actuating the conveyor (4), the latter displaces a number of housings (20) equal to the number of loaded pellets (P) plus one.

21. The method according to any of claims 18 to 20, wherein during the step for actuating the conveyor (4), the latter displaces a number of housings (20) equal to the number of loaded pellets (P).

22. The method according to any of claims 18 to 21, wherein during the transfer step, the conveyor (4) stands still relatively to the dies (10), so as to align each die (10) with a housing (20).

23. The method according to any of claims 18 to 22, wherein during the transfer step, the pellets (P) topple around an axis parallel to the displacement direction of the conveyor, from an upright position to a lying position.

24. The method according to any of claims 18 to 23, including an additional step for introducing a picked-up pellet into the production device after the picking-up means, when it is considered as acceptable.

## Patentansprüche

1. Vorrichtung zur Herstellung von Kernbrennstofftabletten, mit einer Presse (2), die mit Gesenken (10) versehen ist, einer Fördereinrichtung (4), die dazu bestimmt ist, Tabletten (P) von der Presse (2) zu einer Versinterungszone zu transportieren, Mitteln (26) zum Umladen der Tabletten von der Presse (2) zu der Fördereinrichtung (4) und Mitteln zum Kontrollieren wenigstens einer Kernbrennstofftablette am Ausgang der Presse (2), wobei die Kontrolimittel Mittel umfassen, um jede Tablette nach ihrem Herkunftgesenk (10) zu identifizieren, wobei die ldentifizierungsmittel durch eine Folge von Aufnahmesitzen (20) gebildet sind, die von der Oberfläche der Fördereinrichtung (4) getragen werden und jeweils eine Tablette (P) aufnehmen können, wobei jeder der Aufnahmesitze einem bestimmten Gesenk zugeordnet ist.

2. Vorrichtung nach dem vorhergehenden Anspruch, wobei die Aufnahmesitze (20) zu einer Richtung (X) der Verlagerung der Fördereinrichtung senkrecht sind.

3. Vorrichtung nach Anspruch 1 oder 2, wobei der Abstand, der zwei benachbarte Aufnahmesitze (20) trennt, gleich jenem ist, der zwei Gesenke (10) trennt, deren jeweilige Projektionen auf eine zu der Verlagerungsrichtung der Fördereinrichtung parallele Gerade die nächsten Projektionen sind.

4. Vorrichtung nach dem vorhergehenden Anspruch, wobei die Fördereinrichtung (4) Mittel umfasst, um die Aufnahmesitze auf die Gesenke auszurichten.

5. Vorrichtung nach einem der Ansprüche 1 bis 4, wobei die Fördereinrichtung durch Rollen verlagert wird und wobei eine vollständige Rollenumdrehung einer Verlagerung einer bestimmten Anzahl von Aufnahmesitzen (20) entspricht.

6. Vorrichtung nach einem der Ansprüche 1 bis 5, wobei die Aufnahmesitze (20) dazu ausgelegt sind, Tabletten (P) in umgelegte Position aufzunehmen.

7. Vorrichtung nach Anspruch 6, wobei die Aufnahmesitze (20) durch Stege (40) begrenzt sind, die zum Band im Wesentlichen senkrecht sind.

8. Vorrichtung nach einem der vorhergehenden Ansprüche, wobei die Fördereinrichtung (4) ein Endlosband (22) ist.

9. Vorrichtung nach einem der vorhergehenden Anspruche, die wenigstens ein Mittel zum Entnehmen wenigstens einer Tablette (P) aus einem bestimmten Gesenk (10) zu einer Analysevorrichtung umfasst.

10. Vorrichtung nach dem vorhergehenden Anspruch, wobei das Entnahmemittel ein Kolben ist, der parallel zur Achse der Aufnahmesitze (20) gleiten kann und eine bestimmte Tablette (P) aus ihrem Aufnahmesitz (20) schiebt, wenn sich der bezeichnete Aufnahmesitz (20) gegenüber dem Kolben befindet.

11. Vorrichtung nach einem der vorhergehenden Anspruche, wobei die Umlademittel einen Kamm (26) umfassen, der auf den Gesenken (10) senkrecht zur Verlagerungsrichtung (X) der Fördereinrichtung gleiten kann.

12. Vorrichtung nach dem vorhergehenden Anspruch, wobei der Kamm (26) Finger (28) aufweist, die durch Zwischenräume (30) getrennt sind, wobei die Anzahl von Zwischenräumen (30) wenigstens gleich der Anzahl von Gesenken (10) ist.

13. Vorrichtung nach dem vorhergehenden Anspruch, wobei die Zwischenräume (30) eine in Richtung der Fördereinrichtung erweiterte Form haben, um die Tabletten (P) aufzunehmen.

14. Vorrichtung nach einem der Ansprüche 1 bis 13 in Kombination mit Anspruch 2, wobei die Umlademittel dazu ausgelegt sind, eine Drehung um eine Achse parallel zur Verlagerungsrichtung der Fördereinrichtung (4) zu ermöglichen.

15. Vorrichtung nach einem der vorhergehenden Ansprüche, wobei die Presse ein von der Fördereinrichtung geführtes Ende umfasst, das eine Abschrägung (36) nach unten in Richtung der Fördereinrichtung aufweist.

16. Vorrichtung nach einem der vorhergehenden Ansprüche, die außerdem eine Vorrichtung zur Analyse entnommener Tabletten umfasst.

17. Vorrichtung nach einem der vorhergehenden Ansprüche, die Mittel umfasst, um die entnommenen Tabletten stromabwärts der Entnahmemittel in die Herstellungsvorrichtung einzuleiten, wenn ihre Eigenschaften annehmbar sind.

18. Verfahren zum Herstellen von Kernbrennstofftabletten, das die Vorrichtung nach einem der vorhergehenden Ansprüche verwendet, das die folgenden Schritte umfasst:
- Befüllten der Gesenke (10) mit dem Pulver,
- Pressen des Pulvers,
- Umladen der Tabletten (P) in die Fördereinrichtung (4),
- Betätigen der Fördereinrichtung (4),
- Entnehmen einer Tablette (P) aus einem bestimmten Gesenk (10),
- Verifizieren der guten Funktion dieses vorgegebenen Gesenks durch Kontrollieren der von diesem Gesenk stammenden Tablette,
- Transportieren der Tabletten (P) zu einer Versinterungszone.

19. Verfahren nach dem vorhergehenden Anspruch, wobei im Entnahmeschritt die entnommene Tablette (P) von einem Gesenk (10) stammt, das von jenem der Tablette, die im vorhergehenden Entnahmeschritt entnommen ist, verschieden ist.

20. Verfahren nach Anspruch 18 oder 19, wobei im Schritt des Betätigens der Fördereinrichtung (4) diese eine Anzahl von Aufnahmesitzen (20) verlagert, die gleich der geladenen Tabletten (P) plus eins ist.

21. Verfahren nach einem der Ansprüche 18 bis 20, wobei im Schritt des Betätigens der Fördereinrichtung (4) diese eine Anzahl von Aufnahmesitzen (20) verlagert, die gleich der Anzahl geladener Tabletten (P) ist.

22. Verfahren nach einem der Ansprüche 18 bis 21, wobei im Umladeschritt die Fördereinrichtung (4) in Bezug auf die Gesenke (10) unbeweglich ist, derart, dass jedes Gesenk (10) auf einen Aufnahmesitz (20) ausgerichtet wird.

23. Verfahren nach einem der Ansprüche 18 bis 22, wobei im Umladeschritt die Tabletten (P) um eine Achse parallel zur Verlagerungsrichtung der Fördereinrichtung aus einer aufrechten Position in eine umgelegte Position kippen.

24. Verfahren nach einem der Ansprüche 18 bis 23, das einen zusätzliche Schritt des Einführens einer entnommenen Tablette in die Herstellungsvorrichtung nach den Entnahmemitteln umfasst, wenn sie als annehmbar betrachtet wird.
